# EUROPÄISCHE PATENTSCHRIFT

(11) **EP 2 177 424 B1**
(45) Veröffentlichungstag und Bekanntmachung des Hinweises auf die Patenterteilung: **17.10.2012**
(21) Anmeldenummer: 09009521.7
(22) Anmeldetag: 22.07.2009
(51) Int. Cl.: B62D 25/14, B62D 27/06

(54) **Querträger für ein Kraftfahrzeug**
Cross-member for a motor vehicle
Traverse pour un véhicule automobile

(30) Priorität: 17.10.2008 DE 102008052226
(43) Veröffentlichungstag der Anmeldung: 21.04.2010
(73) Patentinhaber: DURA Automotive Body and Glass Systems GmbH, 58840 Plettenberg (DE)
(72) Erfinder: Gerke, Jörg, 59846 Sundern (DE); Capoglu, Sedat, 58840 Plettenberg (DE)
(74) Vertreter: Zinnecker, Armin

(56) Entgegenhaltungen:
- EP-A1- 1 298 035
- WO-A1-2005/085046
- DE-A1- 4 232 846
- DE-A1- 19 753 178
- US-A1- 2007 284 906

## Beschreibung

Die Erfindung betrifft einen Querträger für ein Kraftfahrzeug, wobei der Querträger einen Lagerbock aufweist.

Ein derartiger Querträger ist aus der EP 1 298 035 B1 bekannt.

Der Querträger ist mit den A-Säulen des Kraftfahrzeugs verbunden. Ferner ist der Querträger mit der Stirnwand oder dem Scheibenquerträger des Kraftfahrzeugs verbunden. Die Verbindung des Querträgers mit der Stirnwand oder dem Scheibenquerträger erfolgt durch den Lagerbock des Querträgers. Der Querträger kann zusätzlich mit dem Tunnel des Kraftfahrzeugs verbunden sein.

Der Querträger verläuft in horizontaler Richtung quer zur Fahrzeug-Längsrichtung. Er befindet sich unterhalb der Unterkante der Frontscheibe. An dem Querträger, der auch als Cockpit-Querträger, Instrumententafelträger oder Cross Car Beam bezeichnet wird, können weitere Gegenstände befestigt sein, insbesondere eine Instrumententafel, eine Lenksäule, ein Beifahrer-Airbag, ein Klimagerät, Luftkanäle und/oder Elektrikteile. Der Querträger und die weiteren Gegenstände bilden ein Cockpitmodul.

Vorteilhaft ist es, wenn das Cockpitmodul vormontiert werden kann und im vormontierten Zustand eingebaut werden kann, also mit den A-Säulen des Kraftfahrzeugs oder der Kraftfahrzeugkarosserie und der Stirnwand oder dem Scheibenquerträger verbunden werden kann. Dies ist allerdings bei vorbekannten Ausführungsformen mit Schwierigkeiten verbunden.

Aus der DE 197 53 178 A1 ist ein weiterer Querträger nach dem Oberbegriff des Anspruchs 1 bekannt. Dieser Querträger umfaßt Befestigungselemente für die Befestigung des Querträgers an den A-Säulen der Karosserie des Kraftfahrzeugs.

Aufgabe der Erfindung ist es, die Montage und/oder Demontage eines Querträgers der eingangs angegebenen Art zu erleichtern.

Erfindungsgemäß wird diese Aufgabe durch die kennzeichnenden Merkmale des Anspruchs 1 gelöst. Der Querträger ist durch den Lagerbock mit der Stirnwand oder dem Scheibenquerträger verbindbar oder verbunden. Der Querträger weist eine Öffnung im Bereich des Lagerbocks auf. Durch diese Öffnung sind die Montagestellen, insbesondere die Verschraubungsstellen des Lagerbocks mit der Stirnwand oder dem Scheibenquerträger zugänglich, wodurch die Montage und Demontage des Querträgers erleichtert wird.

Vorteilhafte Weiterbildungen sind in den Unteransprüchen beschrieben.

Der Lagerbock ist vorzugsweise im Bereich der Lenksäule vorgesehen. In diesem Bereich werden verhältnismäßig große Kräfte in den Querträger eingeleitet. Es ist daher vorteilhaft, den Lagerbock im Bereich der Lenksäule anzuordnen, da diese Kräfte dann durch die Verbindung des Lagerbocks mit der Stirnwand oder dem Scheibenquerträger aufgenommen werden können.

Eine weitere vorteilhafte Weiterbildung ist **dadurch gekennzeichnet, daß** die Öffnung des Querträgers hinter dem Kombi-Anzeigegerät vorgesehen ist. Das Kombi-Anzeigegerät umfaßt üblicherweise den Tachometer und weitere Anzeigen für den Fahrer. Das Kombi-Anzeigegerät ist demontierbar. Durch die Demontage des Kombi-Anzeigegeräts wird die Öffnung in dem Querträger zugänglich, wodurch wiederum die Montagestellen des Lagerbocks an der Stirnwand oder dem Scheibenquerträger zugänglich werden. Es ist allerdings auch möglich, die Öffnung hinter einem anderen demontierbaren Gegenstand, der mit dem Querträger unmittelbar oder mittelbar verbindbar oder verbunden ist, vorzusehen. Auch in diesem Fall werden die Befestigungsstellen des Lagerbocks durch eine einfache Demontage zugänglich.

Die Erfindung betrifft ferner ein Cockpitmodul, das einen erfindungsgemäßen Querträger umfaßt. Vorzugsweise handelt es sich um ein vormontiertes Cockpitmodul.

Das Cockpitmodul umfaßt einen erfindungsgemäßen Querträger und einen oder mehrere weitere Gegenstände wie oben erläutert. Insbesondere umfaßt das Cockpitmodul einen demontierbaren Gegenstand, der die Öffnung in dem Querträger verdeckt und nach einer Demontage freigibt. Dabei handelt es sich vorzugsweise um das Kombi-Anzeigegerät.

Die Erfindung betrifft ferner ein Kraftfahrzeug, das durch einen erfindungsgemäßen Querträger oder durch ein erfindungsgemäßes Cockpitmodul gekennzeichnet ist.

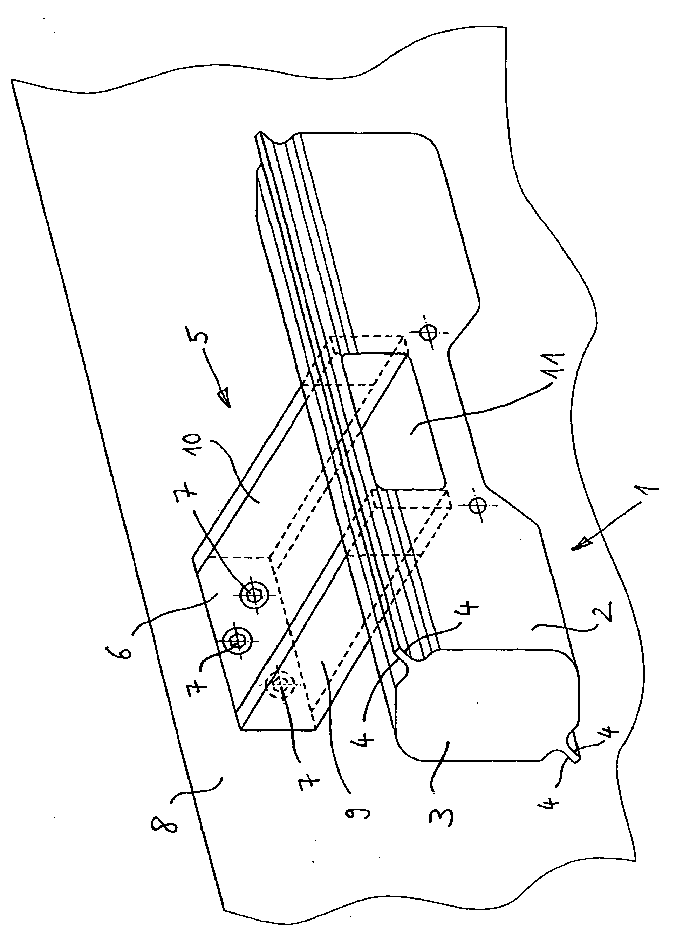

Ein Ausführungsbeispiel der Erfindung wird nachstehend anhand der beigefügten Zeichnung im einzelnen erläutert. In der Zeichnung zeigt die
- einzige Figur: einen Teile eines Querträgers für ein Kraftfahrzeug in einer perspektivischen Ansicht.

Der in der einzigen Figur gezeigte Querträger 1 ist aus zwei Halbschalen 2, 3 zusammengesetzt. Die Halbschalen 2, 3 sind im Bereich von Laschen 4 miteinander verbunden, insbesondere verschweißt oder verklebt. Der Querträger 1 hat einen im wesentlichen rechteckigen, hohlen Querschnitt mit abgerundeten Ecken. Er verläuft in horizontaler Richtung quer zur Fahrzeug-Längsachse und ist an seinen Enden mit den A-Säulen des Kraftfahrzeugs verbunden.

Der Querträger 1 weist einen Lagerbock 5 auf. Der Lagerbock 5 ist als gesondertes Bauteil hergestellt und mit dem Querträger 1 verbunden, insbesondere verschweißt. Der Lagerbock 5 verläuft in horizontaler Richtung in Fahrzeug-Längsrichtung vom Querträger 1 in Fahrzeugrichtung nach vorne. Seine vordere Endfläche 6 ist mittels Schrauben 7 an der Stirnwand 8 des Kraftfahrzeugs befestigt. Er kann auch an dem Scheibenquerträger des Kraftfahrzeugs befestigt sein. Die Seitenwände 9, 10 des Lagerbocks weisen jeweils ein U-förmiges Profil auf. Sie sind beabstandet voneinander und verlaufen parallel zueinander.

Der Querträger 1 weist eine Öffnung 11 auf. Die Öffnung 11 befindet sich im Bereich des Lagerbocks 5. Sie überbrückt in horizontaler Richtung den Abstand zwischen den Seitenwänden 9, 10 des Lagerbocks 5. Ferner weist sie im wesentlichen dieselbe Höhe auf wie die Seitenwände 9, 10 des Lagerbocks 5. Die Größe der Öffnung 11 ist derart bemessen, daß sie den Durchtritt eines Schraubwerkzeugs zu den Schrauben 7 ermöglicht.

Der Lagerbock 5 ist im Bereich der Lenksäule vorgesehen. Damit befindet sich auch die Öffnung 11 im Bereich der Lenksäule.

An dem Querträger 1 können weitere Gegenstände befestigt werden, insbesondere eine Instrumententafel und/oder ein Kombi-Anzeigegerät. Das Kombi-Anzeigegerät kann an der Instumententafel lösbar befestigt sein, die ihrerseits an dem Querträger 1 befestigt sein kann. In diesem Fall weist die Instrumententafel im Bereich des Kombi-Anzeigegeräts eine Öffnung auf, die der Öffnung 11 in dem Querträger 1 entspricht. Es ist allerdings auch möglich, daß das Kombi-Anzeigegerät an dem Querträger 1 unmittelbar oder anderweitig mittelbar lösbar befestigt ist. Ferner ist es möglich, daß im Bereich der Öffnung 11 ein anderer Gegenstand vorgesehen ist, der an dem Querträger 1 mittelbar oder unmittelbar lösbar befestigt ist und der nach seiner Demontage die Öffnung 11 freigibt.

Der Lagerbock 5 kann mit dem Querträger 1 verschweißt sein. Seine Seitenwände 9, 10 können in entsprechende Öffnungen der Halbschale 3 eingesteckt sein. Die Öffnung 11 ist in beiden Halbschalen 2, 3 vorhanden.

Durch die Erfindung wird es ermöglicht, einen Querträger oder ein vormontiertes Cockpitmodul mit der Stirnwand oder dem Scheibenquerträger eines Kraftfahrzeugs zu verbinden, insbesondere zu verschrauben, wobei diese Verbindung durch eine Öffnung in dem Querträger hindurch erfolgen kann. Die Öffnung befindet sich im Bereich der Lenksäule hinter dem Kombi-Anzeigegerät. Die Verschraubung des Lagerbocks läßt sich dadurch bei eingebautem Cockpitmodul erreichen, da das Kombi-Anzeigegerät einzeln demontierbar ist. Die bisherigen Verschraubungen an der Stirnwand benötigen einen Ausbau der Instumententafel bzw. einen Teilausbau der Instrumententafel. Durch die Erfindung kann Montagezeit eingespart werden und eine steifere Verbindung aufgeführt werden. Die Verbindung des Querträgers mit der Karosserie kann durch einen Ausbau des Kombi-Anzeigegeräts im eingebauten Zustand des Cockpitmoduls erreicht werden. Auf diese Weise kann das Cockpitmodul von der Karosserie gelöst werden. Im Rahmen der Erfindung kann eine feste Verbindung zwischen der Tragstruktur Cockpit und dem Scheibenquerträger bzw. der Stirnwand erzeugt werden.

## Patentansprüche

1. Querträger für ein Kraftfahrzeug, wobei der Querträger (1) einen Lagerbock (5) aufweist,
**dadurch gekennzeichnet,**
**daß** der Lagerbock (5) mit dem Querträger (1) verbunden ist,
**daß** die vordere Endfläche (6) des Lagerbocks (5) mittels Schrauben (7) an der Stirnwand (8) oder an den Scheibenquerträger des Kraftfahrzeugs befestigt ist
und **daß** der Querträger (1) eine Öffnung (11) im Bereich des Lagerbocks (5) aufweist, deren Größe derart bemessen ist, daß sie den Durchtritt eines Schraubwerkzeugs zu den Schrauben (7) ermöglicht.

2. Querträger (1) nach Anspruch 1, **dadurch gekennzeichnet, daß** der Lagerbock (5) im Bereich der Lenksäule vorgesehen ist.

3. Querträger (1) nach Anspruch 1 oder 2, **dadurch gekennzeichnet, daß** die Öffnung (11) hinter dem Kombi-Anzeigegerät vorgesehen ist.

4. Cockpitmodul, umfassend einen Querträger (1) nach einem der Ansprüche 1 bis 3.

5. Kraftfahrzeug, **gekennzeichnet durch** einen Querträger (1) nach einem der Ansprüche 1 bis 3 oder ein Cockpitmodul nach Anspruch 4.

## Claims

1. A cross-member for a motor vehicle, wherein the cross-member (1) has a bearing block (5),
**characterised in that**
the bearing block (5) is connected to the cross-member (1);
the front end surface (6) of the bearing block (5) is fastened by means of screws (7) to the end-face wall (8) or to the windscreen cross-member of the motor vehicle;
and **in that** the cross-member (1) has an opening (11) in the region of the bearing block (5) whose size is dimensioned such that it allows the passage of a screwing tool to the screws (7).

2. A cross-member (1) in accordance with claim 1, **characterised in that** the bearing block (5) is provided in the region of the steering column.

3. A cross-member (1) in accordance with claim 1 or claim 2, **characterised in that** the opening (11) is provided behind the combination display unit.

4. A cockpit module comprising a cross-member (1) in accordance with one of the claims 1 to 3.

5. A motor vehicle, **characterized by** a cross-member (1) in accordance with one of the claims 1 to 3 or by a cockpit module in accordance with claim 4.

## Revendications

1. Traverse pour un véhicule automobile, où la traverse (1) présente un support de palier (5), **caractérisée en ce que** le support de palier (5) est relié à la traverse (1), **en ce que** la face d'extrémité avant (6) du support de palier (5) est fixée au moyen de vis (7) à la paroi frontale (8) ou à la traverse de vitre du véhicule automobile, et **en ce que** la traverse (1) présente une ouverture (11) dans la zone du support de palier (5) dont la grandeur est dimensionnée de façon à permettre le passage d'un outil de vissage vers les vis (7).

2. Traverse (1) selon la revendication 1, **caractérisée en ce que** le support de palier (5) est prévu au voisinage de la colonne de direction.

3. Traverse (1) selon la revendication 1 ou 2, **caractérisée en ce que** l'ouverture (11) est prévue derrière l'appareil d'affichage combiné.

4. Module de cockpit, comprenant une traverse (1) selon l'une des revendications 1 à 3.

5. Véhicule automobile, **caractérisé par** une traverse (1) selon l'une des revendications 1 à 3 ou un module de cockpit selon la revendication 4.
